# EUROPÄISCHE PATENTSCHRIFT

(11) **EP 1 817 838 B1**
(45) Veröffentlichungstag und Bekanntmachung des Hinweises auf die Patenterteilung: **15.08.2012**
(21) Anmeldenummer: 05784622.2
(22) Anmeldetag: 12.09.2005
(51) Int. Cl.: H02M 3/158, H02J 7/34, H02H 9/02

(54) **VORRICHTUNG UND VERFAHREN ZUM LADEN EINER ELEKTRISCHEN ENERGIESPEICHEREINRICHTUNG**
DEVICE AND METHOD FOR CHARGING AN ELECTRICAL ENERGY ACCUMULATOR DEVICE
DISPOSITIF ET PROCEDE POUR CHARGER UN DISPOSITIF DE STOCKAGE D'ENERGIE ELECTRIQUE

(30) Priorität: 30.11.2004 DE 102004057690
(43) Veröffentlichungstag der Anmeldung: 15.08.2007
(73) Patentinhaber: ROBERT BOSCH GMBH, 70442 Stuttgart (DE)
(72) Erfinder: SIEVERS, Falko, 72827 Wannweil (DE); SCHUMACHER, Hartmut, 71691 Freiberg (DE)
(86) Internationale Anmeldenummer: PCT/EP2005/054520
(87) Internationale Veröffentlichungsnummer: WO 2006/058800

(56) Entgegenhaltungen:
- EP-A- 1 231 697
- FR-A- 2 838 572
- US-A- 5 754 419
- US-A- 5 998 977
- US-A- 6 094 036
- US-A1- 2003 062 880

## Beschreibung

### STAND DER TECHNIK

Die vorliegende Erfindung betrifft eine Vorrichtung und ein Verfahren zum Laden einer elektrischen Energiespeichereinrichtung.

Obwohl die vorliegende Erfindung in Bezug auf eine Vorrichtung zum Laden einer elektrischen Energiespeichervorrichtung eines Airbagsystems beschrieben wird, ist die vorliegende Erfindung darauf nicht beschränkt.

In Fahrzeugen werden durch eine Lichtmaschine und eine Batterie eine primäre elektrische Versorgungsquelle bereitgestellt, welche typischerweise ein Potential zwischen 9 V und 18 V aufweist. Einzelne sicherheitsrelevante Systeme, wie z. B. ein Airbagsystem, weisen eigene elektrische Energiespeichereinrichtung auf. Bei einem Leistungsausfall der primären Energiequelle wird auf diese Weise sichergestellt, dass die Sicherheits-relevanten Systeme noch ihre primären Funktionen ausführen können. Dazu muss in den Energiespeichereinrichtungen eine ausreichende Energiemenge speicherbar sein. Da die Kapazität der Energiespeicher aus Platz- und Kostengründen nicht beliebig erhöht werden kann, werden die Energiespeicher auf ein erhöhtes Potential, z. B. 22 Volt - 45 Volt, aufgeladen, um auf diese Weise eine größere nutzbare Energiemenge in den Energiespeichern speichern zu können, als dies bei den typischen Versorgungspotentialen von 9 V - 18 V möglich wäre. Außerdem sind auf Grund von Nutzungseinschränkungen Spannungen von z.B. > 10 V zum Zünden von Airbagsystemen notwendig.

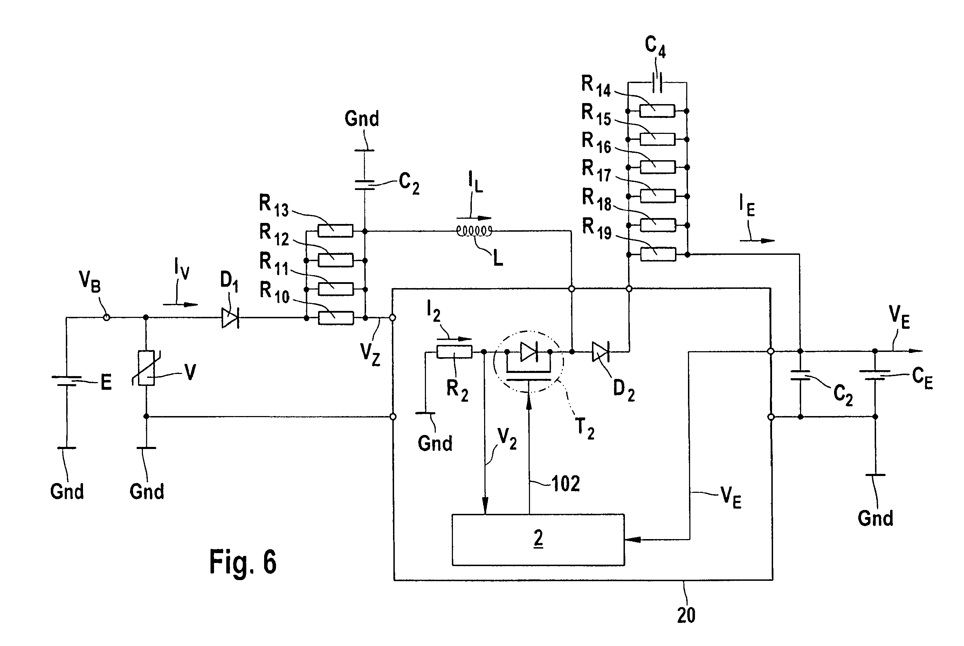

Bei einem Neustart eines Fahrzeuges oder eines Airbagsystems muss die Energiespeichereinrichtung neu aufgeladen werden. In Figur 6 ist eine schematische Darstellung einer Vorrichtung zum Laden der Energiespeichereinrichtung dargestellt. Ein Hauptstrompfad verbindet eine Energiequelle E, welche einen Versorgungsstrom Iᵥbereitstellt, mit der EnergiespeichereinrichtungC_{E}. In dem Hauptstrompfad ist eine Spannungswandlereinrichtung 20 angeordnet, welche das Speicherpotential V_{E} der Energiespeichereinrichtung C_{E} über das Versorgungspotential V_{B} der Energiequelle E anheben kann. Für die Beschaltung der Spannungswandlereinrichtung 20 sind eine externe Diode D1 und eine Induktivität L in dem Hauptstrompfad zwischen der Energiequelle E und der Spannungswandlereinrichtung 20 angeordnet. Da die Diode D1, die Induktivität L und Spannungswandlereinrichtung 20 keinen großen

Widerstand aufweisen, würde beim Einschalten bei zugleich leerem Energiespeicher C_{E} ein großer Versorgungsstrom Iᵥ entlang dem Hauptstrompfad fließen. Dies ist aus mehreren Gründen nachteilig:
1. Es entstehen dabei große Masseversätze, welche empfindlichen Schaltungen stören können.
2. Durch vorgegebene Spezifikationen ist häufig der maximale Strom, welchen eine Vorrichtung anfordern darf, beschränkt.
3. Die thermischen und thermomechanischen Belastungen reduzieren durch die hohen Ströme die Lebensdauer der Bauelemente.

Deshalb sind in dem Hauptstrompfad flussabwärts nach der Spannungswandlereinrichtung 20 Widerstände R14 - R19 angeordnet. Diese begrenzen den maximalen Versorgungsstrom Iᵥ beim Einschalten durch den erhöhten Widerstand des Hauptstrompfades. Nachteiligerweise reduziert sich durch die Widerstände R14 -R19 die Effizienz der Spannungswandlereinrichtung 20, da in diesen elektrische Leistung dissipiert wird. Durch einen parallel geschalteten Kondensator C₄ zu den Widerständen R14 - R 19 kann diese Effizienz erhöht werden.

Aufgrund des getakteten Schaltverhaltens eines Transistor T₂ der Spannungswandlereinrichtung 20 und den damit verbundenen Störsignalen im Bereich von >150 kHz ist eine Filterung des Hauptstrompfades durch einen Tiefpass mit einem Kondensator C₂ und Widerständen R13 - R10 notwendig, welcher zwischen der Energiequelle E und der Spannungswandlereinrichtung 20 in dem Hauptstrompfad angeordnet ist.

Nachteiligerweise führen die zusätzlichen Widerstände R10 - R19 nicht nur zu einer Reduzierung der Effizienz der Vorrichtung zum Laden des Energiespeichers C_{E} und den damit verbundenen Problemen der Wärmeabfuhr, sondern auch zu einem erhöhten Platzbedarf der Gesamtschaltung und erhöhten Montagenkosten durch die vielen einzelnen Bauelemente.

Aus der FR 2 838 572 A ist bekannt, eine Vorrichtung zum Laden einer Energiereserve, die über einen Gleichstrom-Gleichstrom-Wandler mit einer Energiequelle verbunden ist. Die Vorrichtung weist einen Abwärtswandler und einen Gleichstrom-Gleichstrom-Wandler auf. Der Abwärtswandler dient dazu die Spannung der Energiequelle am Eingangspunkt zum Gleichstrom-Gleichstrom-Wandler variable anzupassen.

Aus der US 2003/062880 ist bekannt, ein Spannungsregler in dem ein Einschaltstrom zum Zeitpunkt des Einschalten des Spannungsreglers unterdrückt wird. Ein MOS Transistor wird dazu zwischen die Stromversorgung und einer Spule des Spannungsreglers eingefügt und ein ON Widerstand des MOS Transistors wird zum Zeitpunkt des Einschaltens sehr groß.

Aus der US 5 754 419 A ist bekannt, eine Vorrichtung, die den Stromfluss zwischen einer Spule und einem Ausgangskondenstor in einer Energiekorrekturschaltung eines Spannungswandlers für einen Wechselstrom-Gleichstrom-Transformator kontrolliert durch einen einzelnen Leistungs-MOSFET, der durch eine Gattertreiberschaltung in einem schwingungsdämpfenden Niedrigstrom-Modus während der Aufladephase des Kondensators betrieben und in einem begrenzenden Hochstrom-Modus betrieben wird, sobald der Kondensator ausreichend aufgeladen ist.

Aus der US 6 094 036 A ist bekannt, eine Vorrichtung zur Energieversorgung mit einem Spannungsregler und einem Einschaltstrombegrenzer, der eine Strombegrenzungsschaltung ausweist und einen Hilfskondensator. Ladestromspitzen, die insbesondere dann auftreten, wenn die Vorrichtung zu Energieversorgung eingeschaltet wird, werden durch die Strombegrenzungsschaltung gemindert. Die Strombegrenzungsschaltung ist mit dem Hilfskondensator in Reihe geschaltet, das verhindert, dass Laststrom durch die Strombegrenzungsschaltung fließt. Eine Aufwärtswandlerschaltung ist in Stromflussrichtung der Strombegrenzungsschaltung nachgeschaltet angeordnet, mit dem Ziel die Spannung anzuheben. Ein Vorteil dieser Vorrichtung ist es, dass durch den Aufwärtswandler, der Hilfskondensator verbesserte Charakteristiken im Bezug auf Spannungsregler aufweist. Darüber hinaus reduziert die erhöhte Spannung an den Schaltungskontakten des Einschaltstrombegrenzers die störenden Interferenzspannungseffekte, die durch den Spannungswandler hervorgerufen werden. Zusätzliche Interferenzunterdrückung, z.B. durch kostenintensive Mittel wie Radiowelleninterferenzunterdrückungsschaltungen werden dadurch in vorteilhafter Weise unnötig.

### VORTEILE DER ERFINDUNG

Es besteht der Bedarf einer Schaltung, welche eine hohe Ladeeffizienz aufweist.

Diese Aufgabe wird erfindungsgemäß durch eine Vorrichtung und ein Verfahren zum Laden eines Energiespeichers mit den Merkmalen der Patentansprüche 1 bzw. 18 gelöst.

Eine der vorliegenden Erfindungen zu Grunde liegende Idee besteht darin, dass eine aktive Strombegrenzungseinrichtung in dem Hauptstrompfad den Versorgungsstrom auf einen vorbestimmten Maximalstrom beschränkt. Eine getaktete Spannungswandlereinrichtung, welche der aktiven Strombegren-zung nachfolgend in dem Hauptstrompfad angeordnet ist, hebt das elektrische erste Potential der Energiespeichereinrichtung über ein elektrisches Versorgungspotential einer elektrischen Energiequelle. Der Versorgungsstrom wird von einer Energiespeichereinrichtung bereitgestellt, welche mit dem Hauptstrompfad verbunden ist.

Die vorliegende Erfindung weist gegenüber dem bekannten Lösungsansatz den Vorteil auf, dass der dynamische Innenwiderstand der Strombegrenzungseinrichtung mit zunchmenden Ladezustand, also dem ersten Potential des Energiespeichers sinkt und trotzdem ein gleichbleibend hoher Strom fließen kann. Damit fällt nur zu Beginn des Ladeprozesses der Energiespeichereinrichtung eine nennenswerte Verlustleistung in der Strombegrenzungseinrichtung ab. Zugleich verhindert die aktive Strombegrenzungseinrichtung, dass beim anfänglichen Laden des Energiespeichers ein größerer Strom als ein vorbestimmter Maximalstrom fließen kann. Der Wirkungsgrad des Spannungswandlers ist sehr hoch, da ihm nachgeschaltet keine Widerstände in dem Hauptstrompfad angeordnet werden müssen. Außerdem reduziert sich die Anzahl der benötigten diskreten Bauelemente für die Vorrichtung zum Laden auf die aktive Strombegrenzungseinrichtung und die getaktete Spannungswandlereinrichtung, welche auch zusammen in einem Gehäuse integriert sein können, und zusätzlich eine Induktivität und eine externe Diode.

In den Unteransprüchen finden sich vorteilhafte Weiterbildungen und Verbesserungen der im Patentanspruch 1 angegebenen Vorrichtung zum Laden einer Energiespeichereinrichtung.

Gemäß einer bevorzugten Weiterbildung weist die Strombegrenzungseinrichtung eine steuerbare Stromquelle auf, welche in dem Hauptstrompfad angeordnet ist, wobei die steuerbare Stromquelle durch eine Steuereinrichtung gesteuert wird, welche den Versorgungsstrom erfasst und den Stromfluss des Versorgungsstroms durch die steuerbare Stromquelle auf den vorbestimmten Maximalstrom regelt. Der vorbestimmte Maximalstrom kann anhand des elektrischen Versorgungspotentials, des Potentials der Energieeinrichtung und/oder der Differenz der zuvor genannten Potentiale bestimmt werden.

Gemäß einer weiteren besonders bevorzugten Weiterbildung weist die Strombegrenzungseinrichtung ein erstes Schaltelement auf, welches in dem Hauptstrompfad angeordnet ist, und weist eine Steuereinrichtung auf, welche den Versorgungsstrom erfasst und ein Steuersignal generiert, welches das erste Schaltelement sperrend schaltet, wenn der Versorgungsstrom einen vorbestimmten Maximalstrom übersteigt und das erste Schaltelement leitend schaltet, wenn der Versorgungsstrom geringer als der vorbestimmte Minimalstrom ist und/oder nach einer vorgegebenen Zeitspanne leitend schaltet. Zusätzlich weist die Vorrichtung eine Freilaufeinrichtung auf, welche einen Verbindungspunkt des Hauptstrompfades zwischen der Strombegrenzungseinrichtung und der Spannungswandlereinrichtung mit einer Masse der elektrischen Energiequelle verbindet. Diese Vorrichtung weist den Vorteil auf, dass kaum Leistung in der Strombegrenzungseinrichtung dissipiert wird, da im nicht-leitenden Zustand des Schaltelements kein Versorgungsstrom fließt, während im leitenden Zustand der Widerstand des Schaltelements vernachlässigbar gering ist. Vorteilhafterweise erwärmt sich somit diese Vorrichtung nur in sehr geringem Maße.

Gemäß einer weiteren Weiterbildung weist die Freilaufeinrichtung eine Diode auf, welche in Sperrrichtung den Hauptstrompfad mit der Masse verbindet. Gemäß einer bevorzugten Weiterbildung weist die Freilaufeinrichtung eine dritte Schalteinrichtung auf, welche durch die Steuereinrichtung in Gegenphase zu dem ersten Schaltelement geschaltet wird. Dies reduziert die Verlustleistung in der Vorrichtung um den Betrag, welcher in der vorgenannten Weiterbildung in der Freilaufdiode dissipiert würde.

Gemäß einer weiteren besonders bevorzugten Weiterbildung erfasst die Steuereinrichtung das erste Potential der Energiespeichereinrichtung und/oder das elektrische Versorgungspotential. Die Steuereinrichtung setzt den vorbestimmten Maximalstrom auf einen ersten Maximalstrom, wenn das erste Potential unterhalb eines ersten Schwellwertes liegt und auf einen zweiten Maximalstrom, wenn das erste Potential oberhalb des ersten Schwellwertes liegt. Dabei kann der erste Maximalstrom geringer als der zweite Maximalstrom sein. Zudem kann der zweite Maximalstrom so groß gewählt sein, dass keine Begrenzung des Versorgungsstroms durch die Strombegrenzungseinrichtung erfolgt. Der Vorteil liegt darin, dass die Strombegrenzungseinrichtung bei einem hohen Ladezustand des Energiespeichers den Versorgungsstrom nicht mehr begrenzt, und damit in der Strombegrenzungseinrichtung keine Leistung dissipiert wird.

Gemäß einer bevorzugten Weiterbildung entspricht der Schwellwert dem Versorgungspotential der Energiequelle oder der Schwellwert ist bis zu 3 Volt geringer als das Versorgungspotential.

Gemäß einer weiteren Weiterbildung weist die Strombegrenzungseinrichtung einen Speicherbereich auf, in welchem der Schwellwert, die ersten und zweiten Maximalströme und/oder der Minimalstrom vorgehalten werden. Dies ermöglicht die Vorrichtung nach gegebenen Spezifikationen anzupassen, sodass die Maximalströme innerhalb erlaubter Parameter sind.

Gemäß einer weiteren Weiterbildung wird die getaktete Spannungswandlereinrichtung deaktiviert, wenn das erste Potential des Energiespeichers geringer als ein zweiter Schwellwert ist und wird aktiviert, wenn das erste Potential den zweiten Schwellwert übersteigt. Der erste Schwellwert kann dem zweiten Schwellwert entsprechen. Damit bleibt die Spannerwandlungseinrichtung vorteilhafterweise so lange deaktiviert wie ein effizientes Laden ohne die getaktete Spannungswandlereinrichtung möglich ist.

Gemäß einer Weiterbildung wird die vorgegebene Zeitspanne durch einen Oszillator vorgegeben.

Gemäß einer Weiterbildung weist die Strombegrenzungseinrichtung einen FET-Transistor auf, welcher in dem Hauptstrompfad angeordnet ist, wobei Gate und Source des FET-Transistors voneinander isoliert sind. Beim Sperren wird das Gate mit der Masse und nicht mit Source verbunden. Dadurch wird das Potential an Source nicht durch das Schaltsignal festgelegt. Eine Steuereinrichtung erfasst den Versorgungsstrom und generiert ein Steuersignal, welches das erste Schaltelement sperren schaltct, wenn der Versorgungsstrom einen bestimmten Maximalstrom übersteigt und das erste Schaltelement mit der Masse verbindet, wenn der Versorgungsstrom geringer als ein vorbestimmter Minimalstrom ist und/oder nach einer vorgegebenen Zeitspanne. Durch die Induktivität im Stromkreis, sowie die fehlende Rückkopplung zwischen Gate und Source des FET-Transistors kann das Potential an Source unter das Massepotential absinken und auf diese Weise den FET-Transistor dynamisch leitend halten bis der Strom im induktiven Stromkreis auf das Massepotential absinkt. Dies ermöglicht vorteilhafterweise den Verzicht auf eine Freilaufeinrichtung, welche benötigt wird, um einen Freilaufstrom für die Induktivität im Fall einer gesperrten ersten Schalteinrichtung bereitzustellen. Zu dem ergibt sich ein selbstregelnder Ausschaltvorgang, welcher ein Auftreten von induzierten Spannungsspitzen verhindert.

### ZEICHNUNGEN

Ausführungsbeispiele der Erfindung sowie vorteilhafte Weiterbildungen sind in den Figuren der Zeichnungen dargestellt und in der nachfolgenden Beschreibung näher erläutert.

In den Figuren zeigen:
- Figur 1: eine schematische Darstellung einer Ausführungsform der vorliegenden Erfindung;
- Figur 2: eine schematische Darstellung einer zweiten Ausführungsform der vorliegenden Erfindung;
- Figur 3: eine schematische Darstellung einer dritten Ausführungsform der vorliegenden Erfindung;
- Figur 4: zeigt tabellarisch den Schaltzustand von Schaltelementen einer Ausführungsform der vorliegenden Erfindung;
- Figur 5: stellt schematisch das Ladeverhalten einer Ausführungsform der vorliegenden Erfindung dar; und
- Figur 6: zeigt eine schematische Darstellung einer Ladevorrichtung nach dem Stand der Technik.

### BESCHREIBUNG DER AUSFÜIIRUNGSBEISPIELE

In den Figuren bezeichnen gleiche Bezugszeichen gleiche oder funktionsgleiche Komponenten, soweit nichts gegenteiliges angegeben ist.

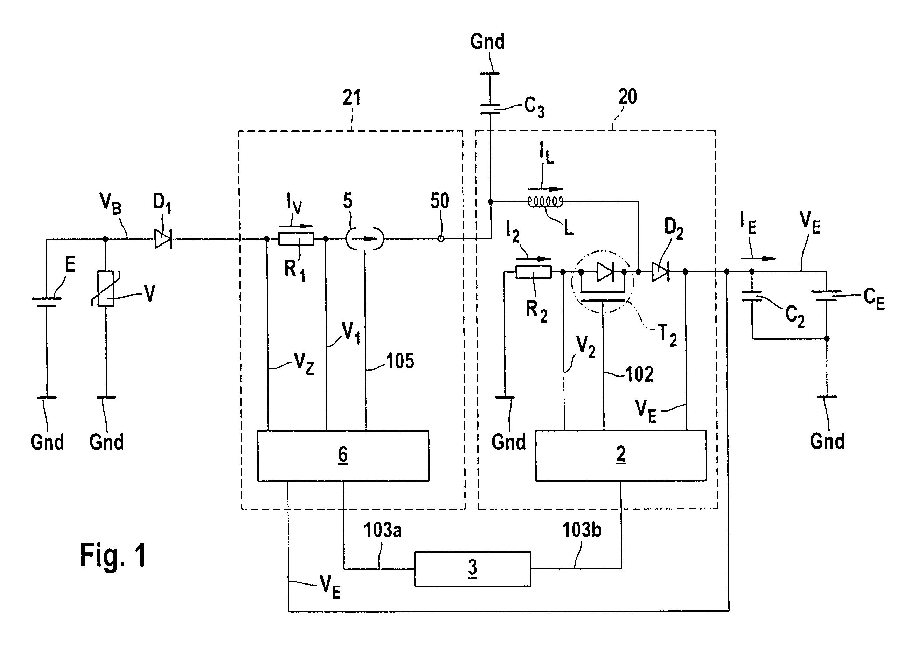

Figur 1 zeigt eine schematische Darstellung einer Vorrichtung zum Laden einer elektrischen Energiespeichereinrichtung C_{E}. Ein Potential V_{E} oder Spannung der Energiespeichereinrichtung C_{E} wird gegenüber einer Masse Gnd gemessen. Eine typische Kapazität einer Energiespeichereinrichtung C_{E} liegt im Bereich von 2-20 mF. Das Potential V_{E} liegt im geladenen Zustand der Energiespeichereinrichtung C_{E} typischerweise im Bereich zwischen 22 V -45 V. Das Produkt der beiden Nenngrößen, der Kapazität und des Potentials V_{E} im Quadrat geben die gespeicherte Energiemenge in der Energiespeichereinrichtung C_{E} an. Da sich die Kapazität der Energiespeichercinrichtung C_{E} aus Kostengründen und/oder wegen einer benötigten kompakten Bauweise nur bedingt beliebig vergrößern lässt, muss das Potential V_{E} die zuvor genannte Größe erreichen, damit die nutzbare Energiemenge ausreicht, um die Ausführung grundlegender Funktionen einer Vorrichtung sicherzustellen, welche bei einem Leistungsabfall der primären Energiequelle E durch die Energiespeichereinrichtung C_{E} versorgt werden soll. Zu dem benötigen Airbag-Steuereinrichtungen eine Mindestspannung, von z.B. 10 V für ihren Betrieb.

Ein Versorgungsstrom Iᵥ wird von einer primären Energiequelle E bereitgestellt. Die primäre Energiequelle E ist über einen Hauptstrompfad mit der Energiespcichereinrichtung C_{E} verbunden. Da typischerweise ein Versorgungspotential V_{B} der primären Energiequelle E nur im Bereich zwischen 9 V - 18 V liegt und damit geringer ist als die geforderten 22 V - 45 V für die Energiespeichereinrichtung C_{E} ist in dem Hauptstrompfad eine Spannungswandlereinrichtung 20 angeordnet. Für die Spannungswandlereinrichtung ist eine Induktivität L und eine nachfolgende Diode D₂ in Durchlassrichtung in dem Hauptstrompfad angeordnet. Ein Verknüpfungspunkt der Induktivität L und der Diode D₂ können über ein zweites Schaltelement T₂ und einen Widerstand R₂ mit der Masse Gnd verbunden werden. Das zweite Schaltelement T₂ wird über ein Steuersignal 102 durch eine Wandlersteuereinrichtung 2 geschlossen und geöffnet. Das zweite Schaltelement T₂ kann als FET-Transistor ausgebildet sein, wobei das Steuersignal 102 an Gate anliegt. Ein Varistor V ist parallel zur primären Energiequelle E im Eingangsbereich geschaltet, um die nachfolgende Schaltung vor Überspannung zu schützen.

In einer ersten Ladephase ist das zweite Schaltelement T₂ geschlossen. Somit fließt der Versorgungsstrom Iᵥ durch die Induktivität L und die Diode D₂ in die Energiespeichereinrichtung C_{E}. Die erste Ladephase ist beendet, wenn das Versorgungspotential V_{B} dem Potential V_{E} der Energiespeichereinrichtung C_{E} entspricht, da dann der Versorgungsstrom Iᵥ nicht mehr fließt. Berücksichtigt man den Spannungsabfall über den Halbleiterbauelementen in dem Hauptstrompfad, wird ersichtlich, dass die erste Ladephase bereits beendet ist, wenn das Potential V_{E} nur noch um 1 V - 3 V geringer ist als die Versorgungsspannung V_{B}. Nach der ersten Ladephase beginnt die zweite Ladephase.

Während der zweiten Ladephase wird periodisch das zweite Schaltelement T₂ leitend geschaltet. Dadurch ergibt sich ein wechselnder Stromfluss I_{L} durch die Induktivität L. Nach dem Induktionsgesetz erzeugt die Induktivität L eine induzierte Spannung, welche von den Parametern der Induktivität und der Stromänderung abhängt. Dabei wird ein Potential an dem Verknüpfungspunkt zwischen der Induktivität L und der Diode D₂ erreicht, welches größer sein kann als das Versorgungspotential V_{B}. Auf diese Weise wird der Energiespeicher C_{E} auf ein Potential V_{E}geladen, welches oberhalb des Versorgungspotentials V_{B} liegt. Ein Rückfluss eines Stroms aus der Energiespeichereinrichtung C_{E} in die primäre Versorgung V wird durch die Diode D₂ verhindert.

Der Spannungswandlereinrichtung 20 ist eine Strombegrenzungseinrichtung 21 vorgeschaltet. Die Strombegrenzungseinrichtung 21 weist eine steuerbare Stromquelle 5 auf, welche über ein Steuersignal 105 durch eine Steuereinrichtung 6 gesteuert wird. Die Steuereinrichtung 6 erfasst den momentanen Wert des Versorgungsstroms Iᵥ. Dazu kann in dem Hauptstrompfad ein Sensorwiderstand R₁ angeordnct sein, wobei die Steuereinrichtung 6 ein Potential V_{z} unmittelbar vor dem Sensorwiderstand R₁ und ein Potential V₁ unmittelbar nach dem Sensorwiderstand R₁ bestimmt. Der auf diese Weise ermittelte Spannungsabfall über dem Sensorwiderstand R₁ ist ein Maß für den momentanen Versorgungsstrom Iᵥ. Überschreitet der Versorgungsstrom Iᵥ einen vorbestimmten Maximalstrom I_{M}, ermittelt die Steuereinrichtung 6 ein entsprechendes Steuersignal, welches den Innenwiderstand der steuerbaren Stromquelle 5 derart erhöht, dass der Versorgungsstrom Iᵥ geringer als der Maximalstrom IM wird.

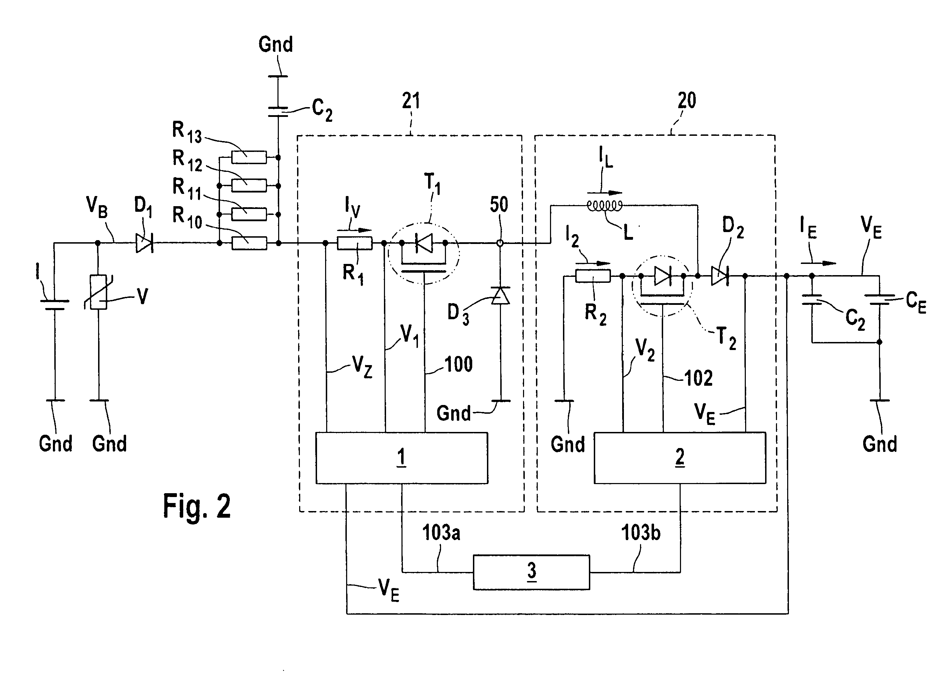

Figur 2 zeigt eine schematische Darstellung einer zweiten Ausführungsform der vorliegenden Erfindung. Die aktive Strombegrenzungseinrichtung 21 weist ein erstes Schaltelement T₁ in dem Hauptstrompfad auf. Das erste Schaltelement ist mit einer Steuereinrichtung 1 verbunden. Die Steuereinrichtung 1 erfasst den Stromfluss durch einen Sensorwiderstand R₁ welcher ebenfalls in dem Hauptstrompfad angeordnet ist. Übersteigt der Spannungsabfall über diesen Sensorwiderstand R₁ einen vorbestimmten Wert, also übersteigt der Stromfluss des Versorgungsstroms Iᵥ einen vorbestimmten Wert, öffnet die Steuereinrichtung 1 über ein Steuersignal 100 die Schalteinrichtung T, und unterbricht somit den Stromfluss in den Hauptstrompfad. Auf diese Weise wird sicher gestellt, dass der Versorgungsstrom Iᵥ einen vorbestimmten Maximalstrom I_{M} nicht überschreitet. Nach einer vorgegebenen Zeitspanne wird das erste Schaltelement T₁ wieder geschlossen und der Versorgungsstrom Iᵥ kann wieder durch den Hauptstrompfad fließen. Der Zeitgeber für die vorbestimmten Zeitintervalle wird durch einen Oszillator 3 vorgegeben, welcher mit der Steuereinrichtung 1 verbunden ist.

In dem Hauptstrompfad ist eine Induktivität L für die getaktete Spannungswandlereinrichtung 20 angeordnet. Aufgrund dieser Induktivität L setzt der Stromfluss des Versorgungsstrom Iᵥ beim Einschalten eines ersten Schaltelements T₁ nicht rechteckförmig ein, sondern weist einen exponentiellen Anstieg auf. Daher ist der Versorgungsstrom Iᵥ für eine Zeitspanne geringer als der Maximalstrom IM und kann während dieser Zeitspanne die Energiespeichereinrichtung C_{E} laden.

Wird das erste Schaltelement T₁ geöffnet und somit der Stromfluss des Versorgungsstroms Iᵥ unterbunden, induziert die Stromänderung ein Senken des Spannungspotentials an einem Verknüpfungspunkt 50 zwischen dem ersten Schaltelement T₁ und der Induktivität L aufgrund der Induktivität L. Der Verknüpfungspunkt 50 ist über eine Diode D₃ in Sperrrichtung mit einer Masse Gnd der Vorrichtung verbunden. Die Masse der Vorrichtung Gnd ist zugleich mit der Energiespeichereinrichtung C_{E} verbunden. Da die induzierte Spannung durch die Induktivität L das Potential eines Verknüpfungspunkt 50 unterhalb das Potential der Masse senkt, wird die Diode D₃ leitend geschaltet. Damit ergibt sich ein geschlossener Stromkreislauf, welche der Diode D₃, die Induktivität L, die Diode D₂ und das Speichereinrichtung C_{E} aufweist. In diesem Stromkreis fliest ein Strom I_{L}, welcher die Energiespeichereinrichtung C_{E} weiter auflädt. Dieser Strom I_{L} wird durch das induzierte Potential angetrieben. Somit wird die Energiespeichereinrichtung C_{E} auch durch die Energiemenge geladen, welche zwischenzeitlich in der Induktivität L in Form einer magnetischen Energie gespeichert wurde.

Das erste Schaltelement T₁ wird permanent leitend geschaltet, wenn das Spannungspotential V_{E} an der Energiespeichereinrichtung einen Wert erreicht hat, welcher sich maximal um 1-3 V von der Versorgungsspannung V_{B} unterscheidet. Dann beginnt die zweite Ladephase, in welcher die Spannungswandlereinrichtung 20 aktiviert wird, um das Spannungspotential V_{E} auf ein Potential zu erhöhen, welches oberhalb des Versorgungspotentials V_{B} liegt.

Aufgrund des getakteten Betriebs der Schaltelemente T₁, T₂ während den Ladephasen ist vor der Strombegrenzungseinrichtung 21 ein Tiefpasselement bestehend aus Widerständen R10 bis R13 und einem Kondensator C₂ angeordnet, um Störungen im Langwellenbereich (100 kHz-300 kHz) auf den Zuleitungen zu unterdrücken.

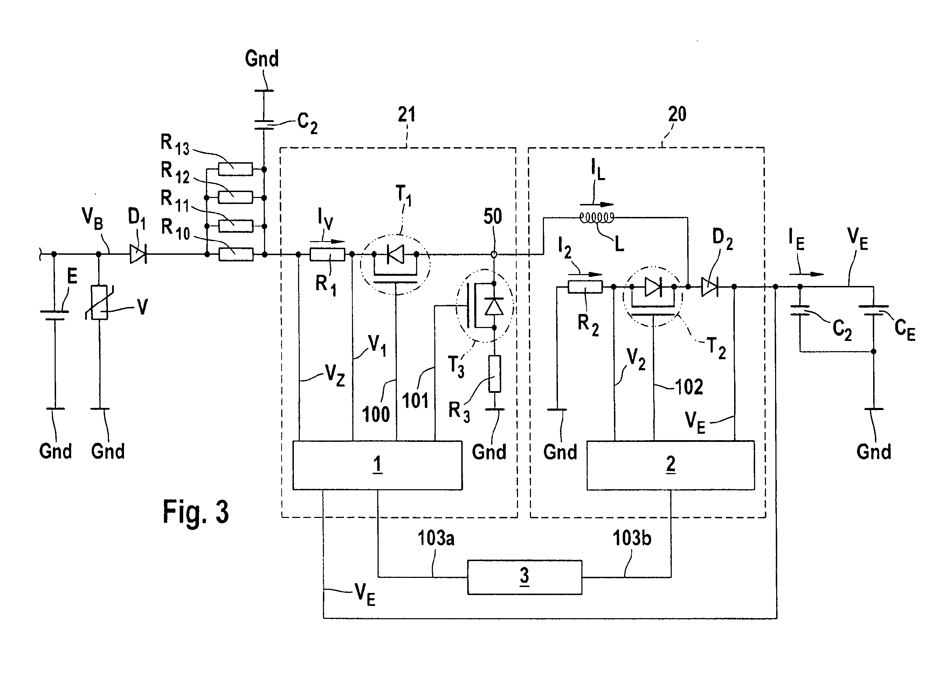

In Figur 3 ist eine dritte Form der vorliegenden Erfindung dargestellt. In der Ausführungsform der Figur 2 fällt über der Diode D₃ eine Spannung ab, welche zu Verlusten führt, wenn die Energiespeichereinrichtung C_{E} durch den induzierten Strom I_{L} geladen wird. Um diese Verluste zu minimieren, wird die Diode D₃ durch ein drittes Schaltelement T₃ ersetzt. Dieses dritte Schaltelement T₃ wird gegenphasig zu dem ersten Schaltelement T₁ geschaltet. Da über dem dritten Schaltelement T₃im leitenden Zustand nahezu kein Spannungsabfall erfolgt, werden die Verluste weiter minimiert und somit die Effizienz der Ladeeinrichtung erhöht.

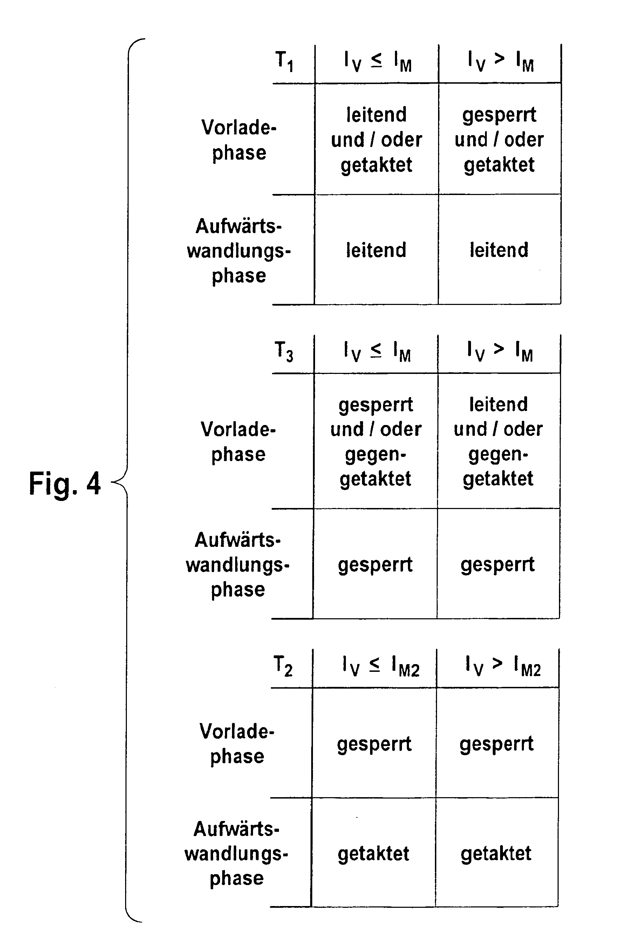

In Figur 4 sind die Schaltzustände des ersten Schaltelements T₁ und des dritten Schaltelements T₃ während der ersten Ladephase (Vorladephase) und der zweiten Ladephase (Aufwärtswandlungsphase) tabellarisch dargestellt, welche die Ladevorrichtung nach einem Erfassen des Versorgungsstroms Iv vorgibt. Das erste Schaltelement T₁ bleibt leitend geschaltet, wenn der erfasste Versorgungsstrom Iᵥ geringer als der Maximalstrom Im ist. Das erste Schaltelement T₁ unterbricht den Hauptstrompfad (ist gesperrt), wenn der erfasste Versorgungsstrom Iᵥ größer als ein vorgegebener Maximalstrom I_{M} ist. Daraufhin fällt der momentane Versorgungsstrom Iᵥ auf 0 A. In einem nächsten Abfragezyklus, kann das erste Schaltelement T₁ wieder leitend geschaltet werden und/oder wenn der Ladestrom I_{E} in die Energiespeichereinrichtung C_{E} unterhalb einen vorgebenen Minimalstrom Im fällt. Hierzu kann eine Erfassung des Ladestroms I_{E}, des Stroms I_{L} oder des Stroms durch die Diode D₃ oder den Transistor T₃ vorgesehen werden, welche in dem gesperrten Zustand des ersten Schaltelements T₁ äquivalent sind. Das dritte Schaltelement T₃ wird nur dann leitend geschaltet, wenn das erste Schaltelement T₁ gesperrt ist. Zusätzlich können die gegenphasigen Schaltzustände von T₁ (getaktet) und T₃ (gegengetaktet) durch das Oszillatorsignal 103a vorgegeben werden.

Zusätzlich ist in Figur 4 der Schaltzustand des zweiten Schaltelements dargestellt, welches in der Aufwärtswandlereinrichtung 20 angeordnet ist. Während der ersten Ladephase (Vorladephase) ist das zweite Schaltelement T₂ und somit die Aufwärtswandlereinrichtung 20 nicht aktiv. Während der zweiten Ladephase (Aufwärtswandlerphase) wird das zweite Schaltelement T₂ getaktet geschaltet und somit der Betrieb der Aufwärtswandlereinrichtung 20 aktiviert. Hierbei kann ebenso eine Begrenzung des Versorgungsstroms I_{V} auf einen Maximalstrom I_{M2} vorgenommen werden.

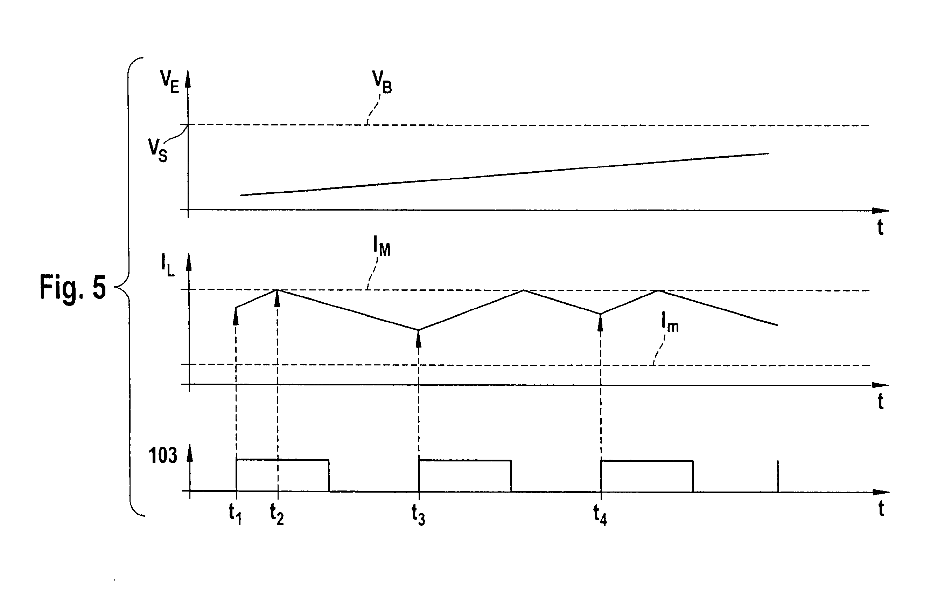

In Figur 5 ist eine schematische Darstellung des Ladezustandes der Energiespeichereinrichtung C_{E} bzw. des Potentials V_{E} der Energiespeichereinrichtung C_{E} während der ersten Ladephase über einer Zeitachse t dargestellt. Das Potential V_{E} ist während der ersten Ladephase noch geringer als das Versorgungspotential V_{B}, nähert sich aber stetig diesem Wert an. In dem mittleren Diagramm ist der Versorgungsstrom Iᵥ über die Zeit aufgetragen. Der Versorgungsstrom Iᵥ wird durch einen Maximalstrom IM nach dem zuvor beschriebenen Verfahren der zweiten oder dritten Ausführungsform begrenzt. Zu einem Zeitpunkt 1 wird das erste Schaltelement T₁ leitend geschaltet. Daraufhin fließt ein Strom I_{L} durch die Induktivität L und lädt die Energiespeichereinrichtung C_{E}. Zu dem Zeitpunkt t₂ erreicht der Strom I_{L} durch die Induktivität L, welcher dem Versorgungsstrom Iᵥ entspricht, den vorgegebenen Maximalstrom I_{M}. In diesem Moment wird das erste Schaltelement T₁ sperrend geschaltet. Daraufhin fließt kein Versorgungsstrom Iᵥ mehr. Jedoch fließt weiterhin ein Strom I_{L} durch die Induktivität L. In dieser Phase ist die Diode D₃ leitend bzw. das dritte Schaltelement T₃ leitend geschaltet. Der Stromfluss durch die Induktivität I_{L} nimmt exponentiell (hier linear genähert) ab. Nach einem vorgegebenem Zeitintervall wird das erste Schaltelement T₁ wieder leitend geschaltet. Daraufhin fließt wieder ein Versorgungsstrom I_{V} und der Strom durch die Spule I_{L} wächst wieder an. Die Zeitpunkte, zu welchen das erste Schaltelement T₁ leitend geschaltet wird, können durch einen Oszillator 3 und dessen Taktsignale 103 vorgegeben werden. Es besteht auch die Möglichkeit, den Stromfluss durch die Spule I_{L} zu überwachen und das erste Schaltelement T₁ leitend zu schalten, wenn der Stromfluss I_{L} durch die Induktivität L unterhalb einen vorbestimmten Minimalstrom Iₘ fällt.

Eine Festlegung des Maximalstroms I_{M} und/oder des Minimalstroms Im kann nach den Vorgaben und Spezifikationen von Anwendern der Ladevorrichtung erfolgen. Diese vorgegebenen Werte können in einer Speichereinrichtung der Speichereinrichtung 1 angelegt werden. Dies ermöglicht eine flexible Verwendung der Ladeeinrichtung.

Eine weitere Ausführungsform, nicht dargestellt, nützt einen FET-Transistor als erstes Schaltelement T₁. Das Steuersignal 100 wird an dem Gate angelegt und kann zugleich mit dem Massepotential Gnd verbunden werden. Das Gate ist elektrisch von dem Source-Drain-Kanal vollständig isoliert. Liegt das Potential an dem Gate auf Masse, da kein Steuersignal 100 von der Steuereinrichtung 1 ausgeben wird, entspricht dies dem geschlossenen Zustand des ersten Schaltelements T₁. Das durch die Induktivität L induzierte Potential senkt das Potential an einem Verknüpfungspunkt 50 unterhalb das Potential der Masse Gnd. Da das Gate auf das Massepotential Gnd festgelegt wird, und dieses nun höher als das Potential an dem Verknüpfungspunkt 50 ist, wird somit das erste Schaltelement T₁ leitend gehalten. Dies ermöglicht einen Freilaufstromkreis über das erste Schaltclcment T₁ ohne eine Freilaufdiode D3. Die Leitfähigkeit des Transistors T₁ sinkt mit dem abnehmenden induzierten Potential, bis der Transistor T₁ nach einer Abklingzeit des induzierten Potentials sperrt.

Ein wesentlicher Vorteil der Erfindung ist, dass sich die Spannungswandlereinrichtung 20 und die Strombegrenzungseinrichtung 21 als ein oder zwei Bauelemente herstellen lassen und diese für ihren Betrieb abgesehen von der Induktivität L und einer Diode D₁ keine weiteren Komponenten zwingend für ihren Betrieb benötigen. Dies reduziert vorteilhafterweise den Platzverbrauch und die Montagekosten.

### Vorrichtung und Verfahren zum Laden einer elektrischen Energiespeichereinrichtung

### BEZUGSZEICHENLISTE

| | |
|---|---|
| 1 | Steuereinrichtung |
| 100 | Steuersignal |
| 102 | Schaltsignal |
| 103a,103b | Taktsignale |
| 105 | Steuersignal |
| 2 | Spannungswandterregter |
| 20 | Spannungswandlereinrichtung |
| 21 | Strombegrenzungseinnchtung |
| 3 | Oszillator |
| 5 | steuerbare Stromquelle |
| 50 | Verbindungspunkt |
| 6 | Steueremrichtung |
| C₁, C₂, C₃, C₄ | Kondensator |
| C_{E} | Energiespeichereinrichtung |
| D₁ D₂, | D₃ Dioden |
| Gnd | Masse |
| I₂ | Strom |
| I_{E} | Ladestrom in C_{E} |
| I_{L} | Strom durch die Induktivität |
| IM | Maximalstrom |
| Iₘ | Minimalstrom |
| Iᵥ | Versorgungsstrom |
| L | Induktivität |
| R₁ | Sensorwiderstand |
| R₂, R₁₀-R₁₃ R₁₄-R₁₉ | Widerstände |
| T₁ | erstes Schaltelement |
| T₂ | zweites Schaltelement |
| T₃ | drittes Schaltelement |
| t1, t2, t3, t4 | Zeitpunkte |
| t | Zeitachse |
| E | elektrische Energiequelle |
| V₁, V₂ | potential |
| V_{B} | Versorgungspotential |
| Vₜ | Potential von CE |
| V_{z} | Potential |
| Vₛ | Schwellwert |
| V | Varistor |

## Patentansprüche

1. Energiespeichereinrichtung (CE) mit einem Ladestrom (IE), wobei die elektrische Energiespeichereinrichtung (CE) über einen Hauptstrompfad mit einer elektrischen Energiequelle (E) verbunden ist, welche einen Versorgungsstrom (IV) bereitstellt;
wobei eine getaktete Spannungswandlereinrichtung (20) in dem Hauptstrompfad angeordnet ist, wobei die getaktete Spannungswandlereinrichtung (20) ein elektrisches erstes Potential (VE) der elektrischen Energiespeichereinrichtung (CE) über ein elektrisches Versorgungspotential (VB) der elektrischen Energiequelle (E) anhebt;
wobei eine aktive Strombegrenzungseinrichtung (21) in dem Hauptstrompfad der getakteten Spannungswandlereinrichtung (20) vorgeschaltet angeordnet ist, welche den Versorgungsstrom (IV) auf einen vorbestimmten Maximalstrom (IM) begrenzt,
**dadurch gekennzeichnet**, daβ
die Strombegrenzungseinrichtung (21) eine steuerbare Stromquelle (5) aufweist,
welche in dem Hauptstrompfad angeordnet ist, wobei die steuerbare Stromquelle (5) durch eine Steuereinrichtung (6) gesteuert wird, welche den Versorgungsstrom (IV) erfasst und den Stromfluss des Versorgungsstroms (IV) durch die steuerbare Stromquelle (5) auf den vorbestimmten Maximalstrom (IM) regelt,
und daβ die getaktete Spannungswandlereinrichtung (20) ein zweites Schaltelement (T2) aufweist, und während einer Vorladephase die getaktete Spannungswandlereinrichtung (20) durch Sperren des zweiten Schaltelements (T2) deaktiviert wird und während einer Aufwärtswandlerphase die getaktete Spannungswandlereinrichtung (20) durch Takten des zweiten Schaltelements (T2) aktiviert wird.

2. Vorrichtung nach Anspruch 1, wobei die Strombegrenzungseinrichtung (21) ein erstes Schaltelement (T1) aufweist, welches in dem Hauptstrompfad angeordnet ist; eine Freilaufeinrichtung (D3, T3) aufweist, welche einen Verbindungspunkt (50) des Hauptstrompfades zwischen der Strombegrenzungseinrichtung (21) und der Spannungswandlereinrichtung (20) mit einer Masse (Gnd) der elektrischen Energiequelle (E) verbindet; und eine Steuereinrichtung (1) aufweist, welche den Versorgungsstrom (IV) erfasst und ein Steuersignal (100) generiert, welches das erste Schaltelement (T1) sperrend schaltet, wenn der Versorgungsstrom (IV) einen vorbestimmten Maximalstrom (IM) übersteigt und das erste Schaltelement (T1) leitend schaltet, wenn der Ladestrom (IE) geringer als ein vorbestimmter Minimalstrom (Im) ist und/oder nach einer vorgegebenen Zeitspanne (dt) leitend schaltet.

3. Vorrichtung nach Anspruch 2, wobei die Freilaufeinrichtung (T3, D3) eine Diode (D3) aufweist, welche in Sperrrichtung den Hauptstrompfad mit der Masse (Gnd) verbindet.

4. Vorrichtung nach Anspruch 3, wobei die Freilaufeinrichtung (D3, T3) eine dritte Schalteinrichtung (T3) aufweist, welche durch die Steuereinrichtung (1) in Gegenphase zu dem ersten Schaltelement geschaltet wird.

5. Vorrichtung nach einem der Ansprüche 1 bis 4, wobei die Steuereinrichtung (1,6) das erste Potential (VE) und/oder das elektrische Versorgungspotential (VB) erfasst.

6. Vorrichtung nach Anspruch 5, wobei die Steuereinrichtung (1,6) den vorbestimmten Maximalstrom (IM) auf einen ersten Maximalstrom (IM1) setzt, wenn das erste Potential (VE) unterhalb eines ersten Schwellwertes (VS1) liegt und auf einen zweiten Maximalstrom (IM2) setzt, wenn das erste Potential oberhalb des ersten Schwellwertes (VS1) liegt.

7. Vorrichtung nach einem der Anspruch 6, wobei der erste Maximalstrom (IM1) geringer als der zweite Maximalstrom (IM2) ist.

8. Vorrichtung nach einem der Ansprüche 6 oder 7, wobei der zweite Maximalstrom (IM2) so groß gewählt ist, dass keine Begrenzung des Versorgungsstroms (IV) durch die Strombegrenzungseinrichtung (21) erfolgt.

9. Vorrichtung nach einem der Ansprüche 6 bis 8, wobei der Schwellwert (VS) dem Versorgungspotential (VB) entspricht.

10. Vorrichtung nach einem der Ansprüche 6 bis 8, wobei der Schwellwert (VS) bis zu 3 Volt geringer als das Versorgungspotential (VB) ist.

11. Vorrichtung nach einem der Ansprüche 6 bis 10, wobei die
Strombegrenzungseinrichtung (21) einen Speicherbereich aufweist, in welchem der Schwellwert (VS), die ersten und zweiten Maximalströme und/oder der Minimalstrom (Im) vorgehalten werden.

12. Vorrichtung nach einem der Ansprüche 1 bis 10, wobei die getaktete Spannungswandlereinrichtung (20) durch die Steuereinrichtung (1,6) deaktiviert wird, wenn das erste Potential (VE) geringer als ein zweiter Schwellwert (VS2) ist und aktiviert wird, wenn das erste Potential (VE) den zweiten Schwellwert (VS2) übersteigt.

13. Vorrichtung nach Anspruch 12, wobei der zweite Schwellwert (VS2) dem ersten Schwellwert (VS1) entspricht.

14. Vorrichtung nach Anspruch 2 bis 4, wobei die vorgegebene Zeitspanne (dt) durch einen Oszillator (6) vorgeben wird.

15. Vorrichtung nach Anspruch 1, wobei die Strombegrenzungseinrichtung (21) einen FET-Tran-sistor (T1) aufweist, welcher in dem Hauptstrompfad angeordnet ist, wobei Gate und Source des FET-Transistors (T1) von einander isoliert sind und das Gate mit einer Masse (Gnd) schaltbar verbunden ist; und eine Steuereinrichtung (1) aufweist, welche den Versorgungsstrom (IV) erfasst und ein Steuersignal (100) generiert, welches das erste Schaltelement (T1) sperrend schaltet, wenn der Versorgungsstrom (IV) einen vorbestimmten Maximalstrom (IM) übersteigt und das erste Schaltelement (T1) leitend schaltet, wenn der Ladestrom (IE) geringer als ein vorbestimmter Minimalstrom (Im) ist und/oder nach einer vorgegebenen Zeitspanne (dt).

16. Vorrichtung nach einem der Ansprüche 1 bis 15, wobei die Strombegrenzungseinrichtung (21) und die Spannungswandlereinrichtung (20) in einem Gehäuse integriert sind.

17. Verfahren zum Laden einer elektrischen Energiespeichereinrichtung (CE) mit der Vorrichtung nach Anspruch 1, mit den Schritten:
Begrenzen des Versorgungsstroms (IV) auf einen vorbestimmten Maximalstrom (IM) durch die Strombegrenzungseinrichtung(21);
Anheben des ersten elektrischen Potentials (VE) der elektrischen
Energiespeichereinrichtung (CE) über in elektrisches Versorgungspotential (VB) der elektrischen Energiequelle (E) mittels der getakteten Spannungswandlereinrichtung (20), wenn das erste elektrische Potential (VE) einen Schwellwert (VS) überschreitet

18. Verfahren nach Anspruch 17, wobei das Begrenzen des Versorgungsstrom (IV) beendet wird, wenn das erste elektrische Potential (VE) den Schwellwert (VS) überschreitet.

## Claims

1. Energy storage device (CE) with a charging current (IE), the electrical energy storage device (CE) being connected, via a main current path, to an electrical energy source (E) which provides a supply current (IV);
a clocked voltage converter device (20) being arranged in the main current path, the clocked voltage converter device (20) raising an electrical first potential (VE) of the electrical energy storage device (CE) above an electrical supply potential (VB) of the electrical energy source (E);
an active current-limiting device (21) being arranged in the main current path upstream of the clocked voltage converter device (20) and limiting the supply current (IV) to a predetermined maximum current (IM),
**characterized in that**
the current-limiting device (21) has a controllable current source (5)
which is arranged in the main current path, the controllable current source (5) being controlled by a control device (6) which detects the supply current (IV) and regulates the flow of the supply current (IV) through the controllable current source (5) to the predetermined maximum current (IM),
and **in that** the clocked voltage converter device (20) has a second switching element (T2), and, during a precharge phase, the clocked voltage converter device (20) is deactivated by disabling the second switching element (T2), and, during a boost converter phase, the clocked voltage converter device (20) is activated by clocking the second switching element (T2).

2. Apparatus according to Claim 1, the current-limiting device (21) having a first switching element (T1) which is arranged in the main current path; having a freewheeling device (D3, T3) which connects a connection point (50) of the main current path between the current-limiting device (21) and the voltage converter device (20) to an earth (Gnd) of the electrical energy source (E); and having a control device (1) which detects the supply current (IV) and generates a control signal (100) which switches off the first switching element (T1) when the supply current (IV) exceeds a predetermined maximum current (IM) and switches on the first switching element (T1) when the charging current (IE) is less than a predetermined minimum current (Im) and/or switches it on after a predefined period of time (dt).

3. Apparatus according to Claim 2, the freewheeling device (T3, D3) having a diode (D3) which connects the main current path to the earth (Gnd) in the reverse direction.

4. Apparatus according to Claim 3, the freewheeling device (D3, T3) having a third switching device (T3) which is switched by the control device (1) in phase opposition to the first switching element.

5. Apparatus according to one of Claims 1 to 4, the control device (1, 6) detecting the first potential (VE) and/or the electrical supply potential (VB).

6. Apparatus according to Claim 5, the control device (1, 6) setting the predetermined maximum current (IM) to a first maximum current (IM1) when the first potential (VE) is below a first threshold value (VS1) and setting it to a second maximum current (IM2) when the first potential is above the first threshold value (VS1).

7. Apparatus according to Claim 6, the first maximum current (IM1) being less than the second maximum current (IM2).

8. Apparatus according to either of Claims 6 and 7, the second maximum current (IM2) being selected to be so large that the current-limiting device (21) does not limit the supply current (IV).

9. Apparatus according to one of Claims 6 to 8, the threshold value (VS) corresponding to the supply potential (VB).

10. Apparatus according to one of Claims 6 to 8, the threshold value (VS) being up to 3 volts less than the supply potential (VB).

11. Apparatus according to one of Claims 6 to 10, the current-limiting device (21) having a memory area which holds the threshold value (VS), the first and second maximum currents and/or the minimum current (Im) .

12. Apparatus according to one of Claims 1 to 10, the clocked voltage converter device (20) being deactivated by the control device (1, 6) when the first potential (VE) is less than a second threshold value (VS2) and being activated when the first potential (VE) exceeds the second threshold value (VS2).

13. Apparatus according to Claim 12, the second threshold value (VS2) corresponding to the first threshold value (VS1).

14. Apparatus according to Claims 2 to 4, the predefined period of time (dt) being predefined by an oscillator (6).

15. Apparatus according to Claim 1, the current-limiting device (21) having an FET (T1) which is arranged in the main current path, the gate and source of the FET (T1) being insulated from one another and the gate being connected to an earth (Gnd) in a switchable manner; and having a control device (1) which detects the supply current (IV) and generates a control signal (100) which switches off the first switching element (T1) when the supply current (IV) exceeds a predetermined maximum current (IM) and switches on the first switching element (T1) when the charging current (IE) is less than a predetermined minimum current (Im) and/or after a predefined period of time (dt).

16. Apparatus according to one of Claims 1 to 15, the current-limiting device (21) and the voltage converter device (20) being integrated in a housing.

17. Method for charging an electrical energy storage device (CE) with the apparatus according to Claim 1, having the following steps:
the current-limiting device (21) limits the supply current (IV) to a predetermined maximum current (IM);
the first electrical potential (VE) of the electrical energy storage device (CE) is raised above an electrical supply potential (VB) of the electrical energy source (E) using the clocked voltage converter device (20) when the first electrical potential (VE) exceeds a threshold value (VS).

18. Method according to Claim 17, the limiting of the supply current (IV) being ended when the first electrical potential (VE) exceeds the threshold value (VS).

## Revendications

1. Dispositif de stockage d'énergie (CE) au moyen d'un courant de charge (IE), dans lequel le dispositif de stockage d'énergie électrique (CE) est connecté par l'intermédiaire d'un trajet de courant principal à une source d'énergie électrique (E) qui fournit un courant d'alimentation (IV) ;
dans lequel un dispositif convertisseur de tension cadencé par horloge (20) est disposé sur le trajet de courant principal, le dispositif convertisseur de tension cadencé par horloge (20) faisant croître un premier potentiel électrique (VE) du dispositif de stockage d'énergie électrique (CE) au-dessus d'un potentiel d'alimentation électrique (VB) de la source d'énergie électrique (E) ;
dans lequel un limiteur de courant actif (21) est connecté en amont sur le trajet de courant principal du dispositif convertisseur de tension cadencé par horloge (20), lequel limiteur limite le courant d'alimentation (IV) à un courant maximal prédéterminé (IM), **caractérisé en ce que** le limiteur de courant (21) comprend une source de courant commandable (5) qui est disposée sur le trajet de courant principal, la source de courant commandable (5) étant commandée par un dispositif de commande (6) qui détecte le courant d'alimentation (IV) et régule l'intensité du courant d'alimentation (IV) à travers la source de courant commandable (5) au courant maximal prédéterminé (IM),
et **en ce que** le dispositif convertisseur de tension cadencé par horloge (20) comprend un deuxième élément de commutation (T2), le dispositif convertisseur de tension cadencé par horloge (20) étant désactivé pendant une phase de précharge, en rendant non passant le deuxième élément de commutation (T2) et le dispositif convertisseur de tension cadencé par horloge (20) étant activé pendant une phase amont du convertisseur par cadencement d'horloge du deuxième élément de commutation (T2).

2. Dispositif selon la revendication 1, dans lequel le limiteur de courant (21) comprend un premier élément de commutation (T1) qui est disposé sur le trajet de courant principal ; un dispositif fonctionnant en roue libre (D3, T3) qui connecte un point de connexion (50) du trajet de courant principal entre le limiteur de courant (21) et le dispositif convertisseur de tension (20) à une masse (Gnd) de la source d'énergie électrique (E) ; et un dispositif de commande (1) qui détecte le courant d'alimentation (IV) et génère un signal de commande (100) qui rend non passant le premier élément de commutation (T1) lorsque le courant d'alimentation (IV) dépasse un courant maximal prédéterminé (IM) et rend passant le premier élément de commutation (T1) lorsque le courant de charge (IE) est inférieur à un courant minimal prédéterminé (Im) et/ou qui le rend passant après une période de temps prédéterminée (dt).

3. Dispositif selon la revendication 2, dans lequel le dispositif fonctionnant en roue libre (T3, D3) comprend une diode (D3) qui connecte en sens non passant le trajet de courant maximal à la masse (Gnd).

4. Dispositif selon la revendication 3, dans lequel le dispositif fonctionnant en roue libre (D3, T3) comprend un troisième dispositif de commutation (T3) qui est connecté par l'intermédiaire du dispositif de commande (1) en opposition de phase au premier élément de commutation.

5. Dispositif selon l'une quelconque des revendications 1 à 4, dans lequel le dispositif de commande (1, 6) détecte le premier potentiel (VE) et/ou le potentiel d'alimentation électrique (VB).

6. Dispositif selon la revendication 5, dans lequel le dispositif de commande (1, 6) règle le courant maximal prédéterminé (IM) à un premier courant maximal (IM1) lorsque le premier potentiel (VE) est inférieur à un premier seuil (VS1) et le règle à un deuxième courant maximal (IM2) lorsque le premier potentiel est supérieur au premier seuil (VS1).

7. Dispositif selon la revendication 6, dans lequel le premier courant maximal (IM1) est inférieur au deuxième courant maximal (IM2).

8. Dispositif selon l'une des revendications 6 et 7, dans lequel le deuxième courant maximal (IM2) est sélectionné de manière à être suffisamment élevé pour qu'il ne se produise aucune limitation du courant d'alimentation (IV) à travers le limiteur de courant (21).

9. Dispositif selon l'une quelconque des revendications 6 à 8, dans lequel le seuil (VS) correspond au potentiel d'alimentation (VB).

10. Dispositif selon l'une quelconque des revendications 6 à 8, dans lequel le seuil (VS) est inférieur, d'une valeur allant jusqu'à 3 volts, au potentiel d'alimentation (VB).

11. Dispositif selon l'une quelconque des revendications 6 à 10, dans lequel le limiteur de courant (21) comprend une zone de mémoire dans laquelle sont conservés le seuil (VS), les premier et deuxième courants maximaux et/ou le courant minimal (Im).

12. Dispositif selon l'une quelconque des revendications 1 à 10, dans lequel le dispositif convertisseur de tension cadencé par horloge (20) est désactivé par le dispositif de commande (1, 6) lorsque le premier potentiel (VE) est inférieur à un deuxième seuil (VS2) et est activé lorsque le premier potentiel (VE) est supérieur au deuxième seuil (VS2).

13. Dispositif selon la revendication 12, dans lequel le deuxième seuil (VS2) correspond au premier seuil (VS1).

14. Dispositif selon les revendications 2 à 4, dans lequel la période de temps prédéterminée (dt) est prédéterminée par un oscillateur (6).

15. Dispositif selon la revendication 1, dans lequel le limiteur de courant (21) comprend un transistor FET (T1) qui est disposé sur le trajet de courant principal, dans lequel la grille et la source du transistor FET (T1) sont isolées l'une de l'autre et la grille est connectée de manière commutable à une masse (Gnd) ; et comprend un dispositif de commande (1) qui détecte le courant d'alimentation (IV) et génère un signal de commande (100) rendant non passant le premier élément de commutation (T1) lorsque le courant d'alimentation (IV) est supérieur à un courant maximal prédéterminé (IM) et rendant passant le premier élément de commutation (T1) lorsque le courant de charge (IE) est inférieur à un courant minimal prédéterminé (Im) et/ou après une période de temps prédéterminée (dt).

16. Dispositif selon l'une quelconque des revendications 1 à 15, dans lequel le limiteur de courant (21) et le dispositif convertisseur de tension (20) sont intégrés dans un boîtier.

17. Procédé de charge d'un dispositif de stockage d'énergie électrique (CE) au moyen d'un dispositif selon la revendication 1, comprenant les étapes consistant à _{:}
limiter le courant d'alimentation (IV) à un courant maximal prédéterminé (IM) au moyen du limiteur de courant (21) ;
faire croître le premier potentiel électrique (VE) du dispositif de stockage d'énergie électrique (CE) au-dessus d'un potentiel d'alimentation électrique (VB) de la source d'énergie électrique (E) au moyen du dispositif convertisseur de tension cadencé par horloge (20) lorsque le premier potentiel électrique (VE) dépasse un seuil (VS).

18. Procédé selon la revendication 17, dans lequel la limitation du courant d'alimentation (IV) est interrompue lorsque le premier potentiel électrique (VE) dépasse le seuil (VS).
